# EUROPEAN PATENT APPLICATION

(11) **EP 3 883 093 A1**
(43) Date of publication of application: **22.09.2021**
(21) Application number: 19883844.3
(22) Date of filing: 02.08.2019
(51) Int. Cl.: H02K 1/27

(54) **ROTOR**

(30) Priority: 15.11.2018 JP 2018214379
(71) Applicant: DMG Mori Co., Ltd., Yamatokoriyama-shi, Nara 639-1160 (JP)
(72) Inventor: KAWAMOTO, Michio, Yamatokoriyama-shi, Nara 639-1160 (JP)
(74) Representative: MERH-IP Matias Erny Reichl Hoffmann Patentanwälte PartG mbB
(86) International application number: PCT/JP2019/030400
(87) International publication number: WO 2020/100352

(57) **Abstract**

A rotor includes: a rotor core (21) having an outer circumferential surface (22); and a plurality of permanent magnets (31) aligned in a circumferential direction of the rotor core (21) and bonded to the outer circumferential surface (22), and provided to be inclined with respect to an axial direction of the rotor core (21). Each of the plurality of permanent magnets (31) includes an engaging portion (33), the engaging portion (33) having a protruding shape, and extending linearly along the axial direction of the rotor core (21). The rotor core (21) includes an engaged portion (26), the engaged portion (26) having a groove shape, extending linearly along the axial direction of the rotor core (21), and being engaged by the engaging portion (33). With such a configuration, there is provided a rotor that achieves reduction in manufacturing cost and restriction of relative rotation between a rotor core and permanent magnets.

## Description

### TECHNICAL FIELD

The present invention relates to a rotor.

### BACKGROUND ART

For example, Japanese Patent Laying-Open No. 2007-330030 (PTL 1) discloses a rotor including a rotor core, and a ring magnet fixed to the outside of the rotor core and including magnetic poles each provided with a skew. The ring magnet is provided with an engaging groove, and the rotor core is provided with an engaging protrusion that engages with the engaging groove. The engaging groove and the engaging protrusion extend obliquely with respect to a rotation axis of the rotor so as to correspond to the skew of each magnetic pole.

### CITATION LIST

### PATENT LITERATURE

PTL 1: Japanese Patent Laying-Open No. 2007-330030

### SUMMARY OF INVENTION

### TECHNICAL PROBLEM

In the rotor disclosed in PTL 1 above, the engaging protrusion provided in the rotor core engages with the engaging groove provided in the ring magnet, to thereby restrict relative rotation between a rotor shaft and the ring magnet. However, the engaging groove and the engaging protrusion extend obliquely with respect to the rotation axis of the rotor so as to correspond to the skew of each magnetic pole, which requires troublesome processing for providing the engaging groove and the engaging protrusion in the ring magnet and the rotor core, respectively. Thus, the manufacturing cost of the rotor increases.

Accordingly, an object of the present invention is to solve the above-described problem and provide a rotor that achieves reduction in manufacturing cost and restriction of relative rotation between a rotor core and permanent magnets.

### SOLUTION TO PROBLEM

A rotor according to the present invention includes: a rotor core having an outer circumferential surface; and a plurality of permanent magnets aligned in a circumferential direction of the rotor core and bonded to the outer circumferential surface, and provided to be inclined with respect to an axial direction of the rotor core. Each of the plurality of permanent magnets includes an engaging portion, the engaging portion having one of a groove shape and a protruding shape, and extending linearly along the axial direction of the rotor core. The rotor core includes an engaged portion, the engaged portion having the other of the groove shape and the protruding shape, extending linearly along the axial direction of the rotor core, and being engaged by the engaging portion.

### ADVANTAGEOUS EFFECTS OF INVENTION

According to the present invention, there can be provided a rotor that achieves reduction in manufacturing cost and restriction of relative rotation between a rotor core and permanent magnets.

### BRIEF DESCRIPTION OF DRAWINGS

Fig. 1 is a perspective view showing a rotor in a first embodiment of the present invention.
Fig. 2 is a front view showing the rotor when seen in a direction indicated by an arrow II in Fig. 1.
Fig. 3 is a front view showing the rotor in a range surrounded by a two-dot chain line III in Fig. 2.
Fig. 4 is a perspective view showing a rotor core in Fig. 1.
Fig. 5 is a front view and a side view showing a permanent magnet in Fig. 1.
Fig. 6 is an exploded view showing the permanent magnet in Fig. 5.
Fig. 7 is a front view showing the permanent magnet.
Fig. 8 is a front view showing another permanent magnet for comparison with the permanent magnet in Fig. 7.
Fig. 9 is a front view showing a rotor in a second embodiment of the present invention.
Fig. 10 is a front view showing a rotor in a third embodiment of the present invention.
Fig. 11 is a front view showing the rotor in a range surrounded by a two-dot chain line XI in Fig. 10.
Fig. 12 is a front view and a side view showing a permanent magnet in Fig. 10.

### DESCRIPTION OF EMBODIMENTS

Embodiments of the present invention will be described with reference to the drawings. In the drawings referenced below, the same or corresponding components are denoted by the same reference numerals.

### (First Embodiment)

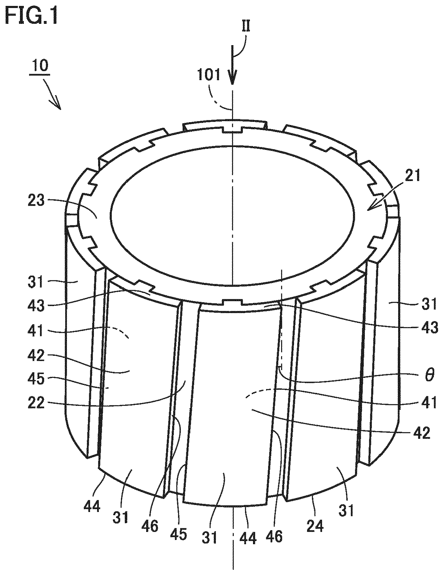

Fig. 1 is a perspective view showing a rotor in a first embodiment of the present invention. Referring to Fig. 1, a rotor 10 in the present embodiment is paired with a stator (not shown) disposed on an outer circumference of rotor 10 with a gap interposed between rotor 10 and the stator, to form a motor. Rotor 10 is used in a motor for a machine tool. As one example, rotor 10 is used in a motor that rotationally drives a spindle of a machining center.

Rotor 10 is supported to be rotatable around an imaginary central axis 101 shown in the figure. When the motor is driven, rotor 10 rotates around central axis 101. The maximum rotation speed of rotor 10 is, for example, 10000 rpm or higher.

Rotor 10 includes a rotor core 21 and a plurality of permanent magnets 31. Rotor core 21 has a cylindrical shape. Rotor core 21 is shaped to extend cylindrically in an axial direction of central axis 101 around central axis 101.

The axial direction of central axis 101 corresponds to an axial direction of rotor core 21, a circumferential direction centered on central axis 101 corresponds to a circumferential direction of rotor core 21, and a radial direction centered on central axis 101 corresponds to a radial direction of rotor core 21.

Rotor core 21 includes an end surface 23, an end surface 24 and an outer circumferential surface 22. End surface 23 and end surface 24 are disposed at one end and the other end in the axial direction of rotor core 21, respectively. End surface 23 and end surface 24 extend in a plane orthogonal to central axis 101. Outer circumferential surface 22 is a cylindrical surface centered on central axis 101 and facing radially outward of central axis 101. Outer circumferential surface 22 is continuous to end surface 23 at one end in the axial direction of rotor core 21. Outer circumferential surface 22 is continuous to end surface 24 at the other end in the axial direction of rotor core 21.

Rotor core 21 is made of a magnetic material. In the present embodiment, rotor core 21 is formed by stacking a plurality of electrical steel sheets in the axial direction of rotor core 21.

The plurality of permanent magnets 31 are provided on an outer circumference of rotor core 21. The plurality of permanent magnets 31 are aligned in the circumferential direction of rotor core 21 and bonded to outer circumferential surface 22. The plurality of permanent magnets 31 are equally spaced from one another in the circumferential direction of rotor core 21. The plurality of permanent magnets 31 are bonded to outer circumferential surface 22 by an adhesive.

Each permanent magnet 31 is provided to be inclined with respect to the axial direction of rotor core 21. The plurality of permanent magnets 31 are provided in parallel with one another, while forming a skew angle θ with respect to the axial direction of rotor core 21. A range of skew angle θ is, for example, 0°<θ≤45°.

In the present embodiment, ten permanent magnets 31 are provided on the outer circumference of rotor core 21. However, the number of permanent magnets 31 is not particularly limited.

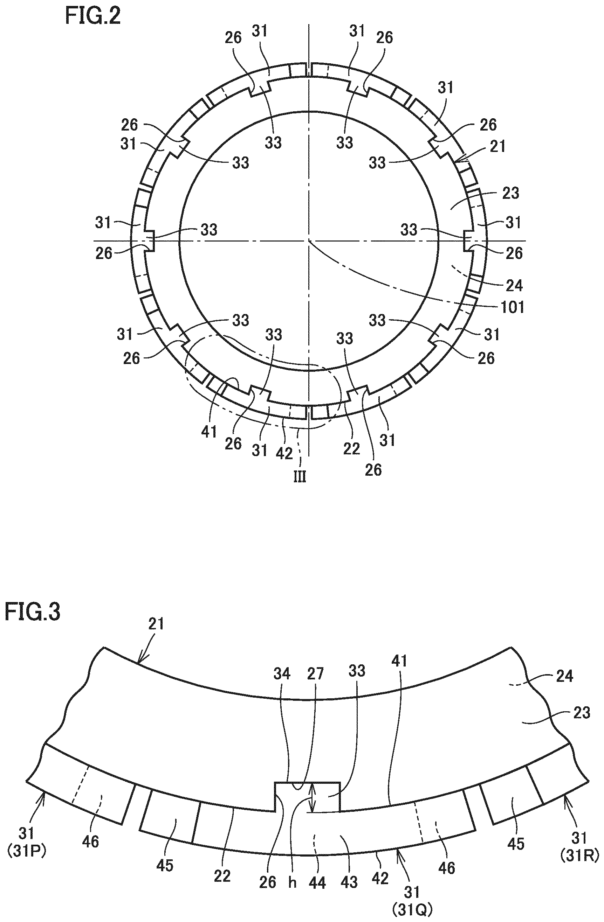

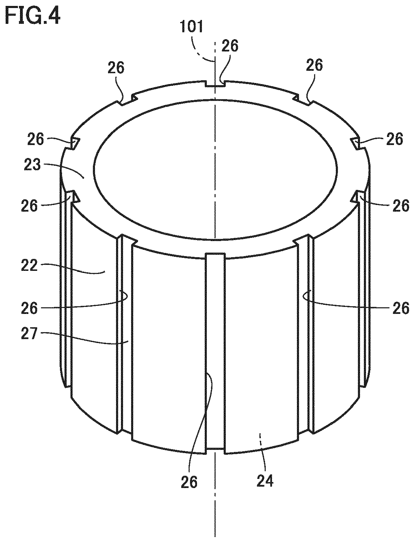

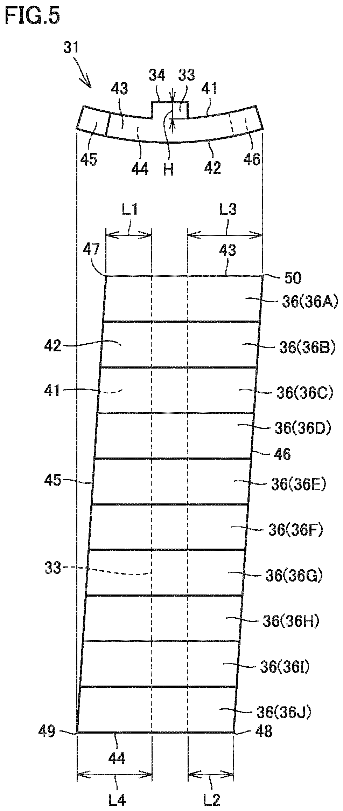

Fig. 2 is a front view showing the rotor when seen in a direction indicated by an arrow II in Fig. 1. Fig. 3 is a front view showing the rotor in a range surrounded by a two-dot chain line III in Fig. 2. Fig. 4 is a perspective view showing the rotor core in Fig. 1. Fig. 5 is a front view and a side view showing the permanent magnet in Fig. 1.

Referring to Figs. 1 to 5, the plurality of permanent magnets 31 have the same shape. Each permanent magnet 31 includes an inner circumferential surface 41, an outer circumferential surface 42, a first end surface 43, a second end surface 44, a first side surface 45, and a second side surface 46.

Inner circumferential surface 41 and outer circumferential surface 42 face each other in the radial direction of rotor core 21. Inner circumferential surface 41 and outer circumferential surface 42 have a parallelogram planar view when seen in the radial direction of rotor core 21. Each of inner circumferential surface 41 and outer circumferential surface 42 is formed of a curved surface extending in an arc shape centered on central axis 101.

Inner circumferential surface 41 faces outer circumferential surface 22 of rotor core 21. Permanent magnets 31 are bonded to rotor core 21 by the adhesive inserted between outer circumferential surface 22 of rotor core 21 and inner circumferential surface 41. Outer circumferential surface 42 faces the stator (not shown) disposed with the gap interposed between rotor 10 and the stator.

First end surface 43 and second end surface 44 face each other in the axial direction of rotor core 21. First end surface 43 and second end surface 44 are displaced from each other in the circumferential direction of rotor core 21 when seen in the axial direction of rotor core 21.

First end surface 43 is disposed at one end in the axial direction of rotor core 21. First end surface 43 is disposed on the same side as end surface 23 of rotor core 21 in the axial direction of central axis 101. First end surface 43 is disposed to be flush with end surface 23 of rotor core 21. Second end surface 44 is disposed at the other end in the axial direction of rotor core 21. Second end surface 44 is disposed on the same side as end surface 24 of rotor core 21 in the axial direction of central axis 101. Second end surface 44 is disposed to be flush with end surface 24 of rotor core 21.

In each permanent magnet 31, first side surface 45 and second side surface 46 face each other in the circumferential direction of rotor core 21. First side surface 45 connects first end surface 43 and second end surface 44 to each other. First side surface 45 extends obliquely with respect to the axial direction of rotor core 21, and connects one ends of first end surface 43 and second end surface 44 in the circumferential direction of rotor core 21 to each other. Second side surface 46 connects first end surface 43 and second end surface 44 to each other. Second side surface 46 extends obliquely with respect to the axial direction of rotor core 21, and connects the other ends of first end surface 43 and second end surface 44 in the circumferential direction of rotor core 21 to each other.

First side surface 45 of permanent magnet 31 and second side surface 46 of permanent magnet 31 adjacent to this permanent magnet 31 face each other in the circumferential direction of rotor core 21. In the range shown in Fig. 3, a permanent magnet 31P, a permanent magnet 31Q and a permanent magnet 31R are aligned in the listed order in the circumferential direction of rotor core 21. In this case, second side surface 46 of permanent magnet 31P and first side surface 45 of permanent magnet 31Q face each other in the circumferential direction of rotor core 21. Second side surface 46 of permanent magnet 31Q and first side surface 45 of permanent magnet 31R face each other in the circumferential direction of rotor core 21.

Each permanent magnet 31 includes an engaging portion 33. Engaging portion 33 has a protruding shape. Engaging portion 33 extends linearly along the axial direction of rotor core 21.

Engaging portion 33 has a protruding shape protruding radially inward of rotor core 21 from inner circumferential surface 41. Engaging portion 33 has a rib shape extending in the axial direction of rotor core 21 between first end surface 43 and second end surface 44. A width of engaging portion 33 in the circumferential direction of rotor core 21 is constant, regardless of a position in the axial direction of rotor core 21.

Engaging portion 33 includes a top surface 34 at a tip of protrusion from inner circumferential surface 41. Top surface 34 is formed of a plane orthogonal to the radial direction of rotor core 21. As shown in Fig. 5, H represents a length of engaging portion 33 (protrusion length of engaging portion 33) in the radial direction of rotor core 21. Protrusion length H of engaging portion 33 corresponds to a maximum length between inner circumferential surface 41 and top surface 34 in the radial direction of rotor core 21.

Rotor core 21 includes an engaged portion 26. Engaged portion 26 has a groove shape and extends linearly along the axial direction of rotor core 21. Engaged portion 26 is engaged by engaging portion 33 of permanent magnet 31.

Engaged portion 26 has a recessed shape recessed radially inward of rotor core 21 from outer circumferential surface 22. Engaged portion 26 has a groove shape extending in the axial direction of rotor core 21 between end surface 23 and end surface 24. A width of engaged portion 26 in the circumferential direction of rotor core 21 is constant, regardless of a position in the axial direction of rotor core 21.

Engaged portion 26 includes a bottom surface 27 at the bottom of recess from outer circumferential surface 22. Bottom surface 27 is formed of a plane orthogonal to the radial direction of rotor core 21. h represents a length of engaged portion 26 (groove depth of engaged portion 26) in the radial direction of rotor core 21, and h is equal to length H of engaging portion 33 in the radial direction of rotor core 21 (h=H). Groove depth h of engaged portion 26 corresponds to a maximum length between outer circumferential surface 22 and bottom surface 27 in the radial direction of rotor core 21.

Engaged portion 26 provided in rotor core 21 and having a groove shape is engaged by engaging portion 33 provided in permanent magnet 31 and having a protruding shape, to thereby restrict relative rotation between rotor core 21 and permanent magnets 31. Thus, even when excessive force (torque) is generated in the circumferential direction of rotor core 21 due to rotation of rotor 10, positional displacement of permanent magnets 31 with respect to rotor core 21 can be prevented.

In the present embodiment, each permanent magnet 31 is provided to be inclined with respect to the axial direction of rotor core 21, while engaging portion 33 and engaged portion 26 extend linearly along the axial direction of rotor core 21. This facilitates processing for providing engaging portion 33 and engaged portion 26 in permanent magnet 31 and rotor core 21, respectively, and thus, the manufacturing cost of rotor 10 can be reduced.

Typically, a process of processing rotor core 21 will be described in detail. If engaged portion 26 extends obliquely with respect to the axial direction of rotor core 21 so as to correspond to skew angle θ in Fig. 1, it is necessary to perform grooving along a direction of a central axis of a cylindrical workpiece while moving the workpiece and a tool (end mill) relatively circumferentially, during formation of groove-shaped engaged portion 26 in the workpiece. This results in an increase in number of machining axes that require control, or complication of a machining program, in a machine tool that processes the workpiece. In contrast, in the present embodiment, engaged portion 26 extends linearly along the axial direction of rotor core 21. With such a configuration, an end mill may only be moved in a direction of a central axis of a workpiece, which facilitates processing of engaged portion 26.

In addition, in the present embodiment, protrusion height H of engaging portion 33 is equal to groove depth h of engaged portion 26, and thus, engaging portion 33 and engaged portion 26 can abut against each other in the radial direction of rotor core 21. Thus, a magnetic flux can efficiently flow between permanent magnets 31 and rotor core 21.

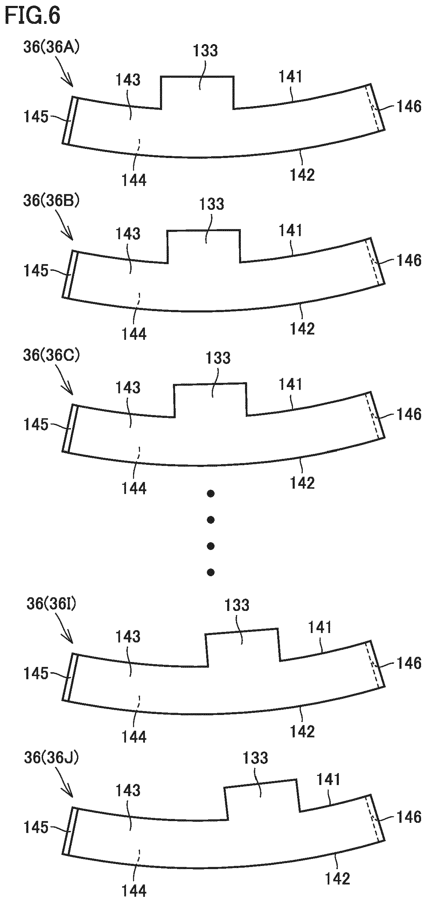

Next, a structure of permanent magnet 31 will be described more specifically. Fig. 6 is an exploded view showing the permanent magnet in Fig. 5.

Referring to Figs. 5 and 6, permanent magnet 31 is composed of a plurality of magnet segments 36 (36A, 36B, 36C, 36D, 36E, 36F, 36G, 36H, 361, 36J). The plurality of magnet segments 36 are arranged along the axial direction of rotor core 21 while being displaced in the circumferential direction of rotor core 21.

Magnet segment 36A, magnet segment 36B, magnet segment 36C, magnet segment 36D, magnet segment 36E, magnet segment 36F, magnet segment 36G, magnet segment 36H, magnet segment 361, and magnet segment 36J are aligned in the listed order in the axial direction of rotor core 21. Magnet segment 36A and magnet segment 36J are disposed at one end and the other end in the axial direction of rotor core 21, respectively.

Each magnet segment 36 includes an inner circumferential surface 141, an outer circumferential surface 142, a first end surface 143, a second end surface 144, a first side surface 145, and a second side surface 146.

Inner circumferential surface 141 and outer circumferential surface 142 face each other in the radial direction of rotor core 21. First end surface 143 and second end surface 144 face each other in the axial direction of rotor core 21. First side surface 145 and second side surface 146 face each other in the circumferential direction of rotor core 21.

The plurality of magnet segments 36 are arranged such that second end surface 144 of magnet segment 36 and first end surface 143 of magnet segment 36 adjacent to this magnet segment 36 face each other. The plurality of magnet segments 36 are arranged such that inner circumferential surfaces 141 of magnet segments 36 adjacent to each other are continuous, outer circumferential surfaces 142 of magnet segments 36 adjacent to each other are continuous, first side surfaces 145 of magnet segments 36 adjacent to each other are continuous, and second side surfaces 146 of magnet segments 36 adjacent to each other are continuous.

In a state where the plurality of magnet segments 36 are arranged in the axial direction of rotor core 21, inner circumferential surfaces 141 of the plurality of magnet segments 36 form inner circumferential surface 41 of permanent magnet 31, outer circumferential surfaces 142 of the plurality of magnet segments 36 form outer circumferential surface 42 of permanent magnet 31, first side surfaces 145 of the plurality of magnet segments 36 form first side surface 45 of permanent magnet 31, and second side surfaces 146 of the plurality of magnet segments 36 form second side surface 46 of permanent magnet 31. First end surface 143 of magnet segment 36A forms first end surface 43 of permanent magnet 31, and second end surface 144 of magnet segment 36J forms second end surface 44 of permanent magnet 31.

Each magnet segment 36 further includes a protruding portion 133. Protruding portion 133 has a protruding shape protruding radially inward of rotor core 21 from inner circumferential surface 141. Protruding portion 133 extends in a rib shape in the axial direction of rotor core 21.

The plurality of magnet segments 36 differ in position of protruding portion 133 in the circumferential direction of rotor core 21. Protruding portion 133 provided in magnet segment 36A, of the plurality of magnet segments 36, is located closest to first side surface 145. Protruding portion 133 provided in magnet segment 36J, of the plurality of magnet segments 36, is located closest to second side surface 146. From magnet segment 36A toward magnet segment 36J, the position of protruding portion 133 in the circumferential direction of rotor core 21 shifts from the first side surface 145 side to the second side surface 146 side.

The plurality of magnet segments 36 have the same shape except for the position of protruding portion 133 in the circumferential direction of rotor core 21. Each magnet segment 36 is cut out from a magnet block having a thin plate shape by, for example, wire cutting.

In a state where the plurality of magnet segments 36 are arranged in the axial direction of rotor core 21, protruding portions 133 of the plurality of magnet segments 36 are continuous in the axial direction of rotor core 21, to thereby form engaging portion 33 of permanent magnet 31.

With such a configuration, the plurality of magnet segments 36 that differ only in position of protruding portion 133 in the circumferential direction of rotor core 21 may only be prepared. Therefore, the manufacturing cost of permanent magnets 31 can be reduced more effectively.

The case in which permanent magnet 31 is composed of ten magnet segments 36 has been described in the present embodiment. However, the number of magnet segments 36 that form permanent magnet 31 is not particularly limited.

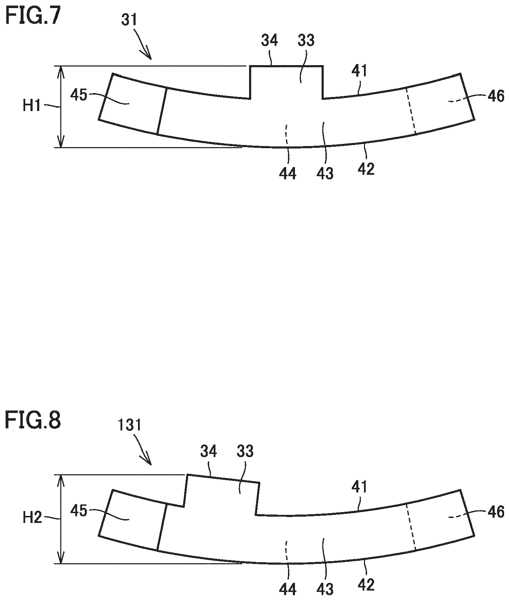

Fig. 7 is a front view showing the permanent magnet. Fig. 8 is a front view showing another permanent magnet for comparison with the permanent magnet in Fig. 7.

Referring to Figs. 5 and 7, in the circumferential direction of rotor core 21, a distance L1 from a corner portion 47 formed by first end surface 43 and first side surface 45 to engaging portion 33 is equal to a distance L2 from a corner portion 48 formed by second end surface 44 and second side surface 46 to engaging portion 33 (L1=L2). A distance L3 from a corner portion 50 formed by first end surface 43 and second side surface 46 to engaging portion 33 is equal to a distance L4 from a corner portion 49 formed by second end surface 44 and first side surface 45 to engaging portion 33 (L3=L4). That is, engaging portion 33 is provided in a central portion in the circumferential direction of rotor core 21.

In a permanent magnet 131 shown in Fig. 8, engaging portion 33 is provided at a position closer to first side surface 45 in the circumferential direction of rotor core 21. In this case, an overall height H2 from outer circumferential surface 42 to engaging portion 33 is great, and thus, a dimension of a magnet block before permanent magnet 131 is cut out is large. This leads to a large amount of processing when permanent magnet 131 is cut out from the magnet block. In contrast, in permanent magnet 31 in the present embodiment shown in Fig. 7, engaging portion 33 is provided in the central portion in the circumferential direction of rotor core 21. In this case, an overall height H1 from outer circumferential surface 42 to engaging portion 33 is small, and thus, an amount of processing when permanent magnet 31 is cut out from the magnet block can be reduced. As a result, the manufacturing cost of permanent magnets 31 can be reduced more effectively.

The structure of rotor 10 in the first embodiment of the present invention described above will be summarized. Rotor 10 in the present embodiment includes: rotor core 21 having outer circumferential surface 22; and the plurality of permanent magnets 31 aligned in the circumferential direction of rotor core 21 and bonded to outer circumferential surface 22, and provided to be inclined with respect to the axial direction of rotor core 21. Each of the plurality of permanent magnets 31 includes engaging portion 33, engaging portion 33 having a protruding shape, and extending linearly along the axial direction of rotor core 21. Rotor core 21 includes engaged portion 26, engaged portion 26 having a groove shape, extending linearly along the axial direction of rotor core 21, and being engaged by engaging portion 33.

According to rotor 10 in the first embodiment of the present invention configured as described above, reduction in manufacturing cost of rotor 10 and restriction of relative rotation between rotor core 21 and permanent magnets 31 can be achieved.

The present invention may be applied not only to a motor for a machine tool, but also to a motor used in a general industrial machine.

### (Second Embodiment)

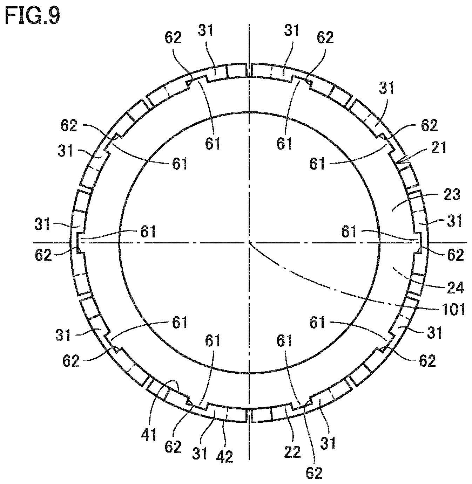

Fig. 9 is a front view showing a rotor in a second embodiment of the present invention. Fig. 9 corresponds to Fig. 2 in the first embodiment. The rotor in the present embodiment is configured basically similarly to rotor 10 in the first embodiment. Hereinafter, the description of the same configuration will not be repeated.

Referring to Fig. 9, in the present embodiment, each permanent magnet 31 includes an engaging portion 62 instead of engaging portion 33 in the first embodiment. Engaging portion 62 has a groove shape and extends linearly along the axial direction of rotor core 21. Engaging portion 62 has a recessed shape recessed radially outward of rotor core 21 from inner circumferential surface 41. Engaging portion 62 has a groove shape extending in a width direction of rotor core 21 between first end surface 43 and second end surface 44.

Rotor core 21 includes an engaged portion 61 instead of engaged portion 26 in the first embodiment. Engaged portion 61 has a protruding shape and extends linearly along the axial direction of rotor core 21. Engaged portion 61 has a protruding shape protruding radially outward of rotor core 21 from outer circumferential surface 22. Engaged portion 61 has a rib shape extending in the axial direction of rotor core 21 between end surface 23 and end surface 24 of rotor core 21. Engaged portion 61 is engaged by engaging portion 62 of permanent magnet 31.

The rotor in the second embodiment of the present invention configured as described above can produce an effect similar to the effect described in the first embodiment.

### (Third Embodiment)

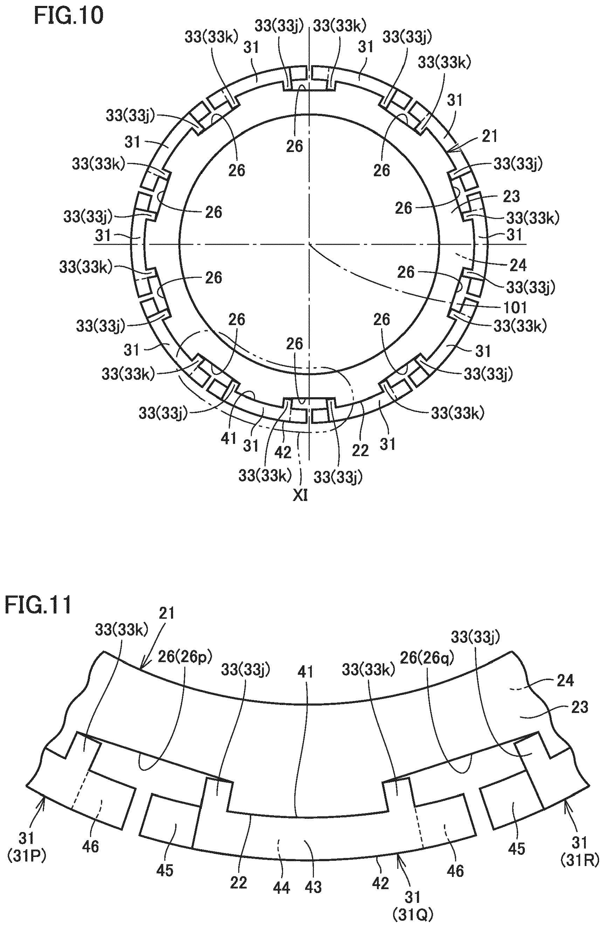

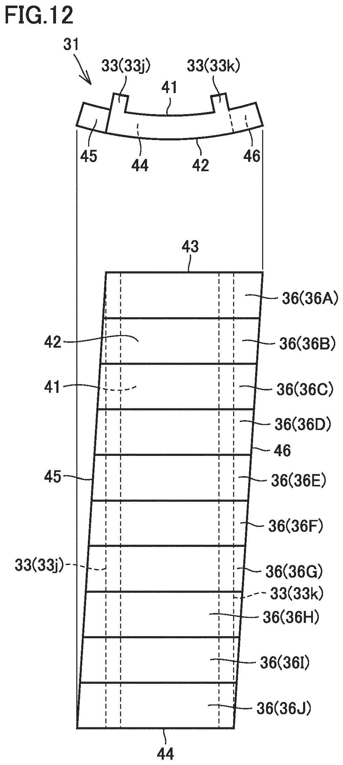

Fig. 10 is a front view showing a rotor in a third embodiment of the present invention. Fig. 11 is a front view showing the rotor in a range surrounded by a two-dot chain line XI in Fig. 10. Fig. 12 is a front view and a side view showing a permanent magnet in Fig. 10. Fig. 10 corresponds to Fig. 2 in the first embodiment, Fig. 11 corresponds to Fig. 3 in the first embodiment, and Fig. 12 corresponds to Fig. 5 in the first embodiment.

The rotor in the present embodiment is configured basically similarly to rotor 10 in the first embodiment. Hereinafter, the description of the same configuration will not be repeated.

Referring to Figs. 10 to 12, in the present embodiment, each permanent magnet 31 includes engaging portions 33 (33j, 33k). Each of engaging portion 33j and engaging portion 33k has a protruding shape and extends linearly along the axial direction of rotor core 21. Engaging portion 33j and engaging portion 33k are spaced apart from each other in the circumferential direction of rotor core 21.

Rotor core 21 includes a plurality of engaged portions 26. Each of engaged portions 26 has a groove shape and extends linearly along the axial direction of rotor core 21. Engaged portion 26 is engaged by engaging portion 33j of permanent magnet 31 and engaging portion 33k of permanent magnet 31 adjacent to this permanent magnet 31.

In the range shown in Fig. 11, permanent magnet 31P, permanent magnet 31Q and permanent magnet 31R are aligned in the listed order in the circumferential direction of rotor core 21. An engaged portion 26p and an engaged portion 26q are provided in rotor core 21 to be aligned in the circumferential direction of rotor core 21. In such a configuration, engaged portion 26p of rotor core 21 is engaged by engaging portion 33k of permanent magnet 31P and engaging portion 33j of permanent magnet 31Q. Engaged portion 26q of rotor core 21 is engaged by engaging portion 33k of permanent magnet 31Q and engaging portion 33J of permanent magnet 31R. In the circumferential direction of rotor core 21, each engaging portion 33 abuts against a side surface of engaged portion 26 having a groove shape.

The rotor in the third embodiment of the present invention configured as described above can produce an effect similar to the effect described in the first embodiment.

The configuration and the function and effect of the present invention will be summarized below.

A rotor according to the present invention includes: a rotor core having an outer circumferential surface; and a plurality of permanent magnets aligned in a circumferential direction of the rotor core and bonded to the outer circumferential surface, and provided to be inclined with respect to an axial direction of the rotor core. Each of the plurality of permanent magnets includes an engaging portion, the engaging portion having one of a groove shape and a protruding shape, and extending linearly along the axial direction of the rotor core. The rotor core includes an engaged portion, the engaged portion having the other of the groove shape and the protruding shape, extending linearly along the axial direction of the rotor core, and being engaged by the engaging portion.

According to the rotor configured as described above, the engaged portion having one of the groove shape and the protruding shape is engaged by the engaging portion having the other of the groove shape and the protruding shape, to thereby restrict relative rotation between the rotor core and the permanent magnets. Each permanent magnet is provided to be inclined with respect to the axial direction of the rotor core, while the engaging portion and the engaged portion extend linearly along the axial direction of the rotor core. This facilitates processing for providing the engaging portion and the engaged portion in the permanent magnet and the rotor core, respectively, and thus, the manufacturing cost of the rotor can be reduced.

Preferably, each of the plurality of permanent magnets is composed of a plurality of magnet segments arranged along the axial direction of the rotor core while being displaced in the circumferential direction of the rotor core. Each of the plurality of magnet segments includes an inner circumferential surface that faces the outer circumferential surface of the rotor core, and one of a groove portion recessed from the inner circumferential surface and a protruding portion protruding from the inner circumferential surface. In a state where the plurality of magnet segments are arranged, a plurality of the groove portions or a plurality of the protruding portions are continuous in the axial direction of the rotor core, to thereby form the engaging portion.

According to the rotor configured as described above, each permanent magnet is composed of the plurality of magnet segments each including the groove portion or the protruding portion. Therefore, the manufacturing cost of the permanent magnets can be reduced more effectively.

Preferably, a length of the engaging portion in a radial direction of the rotor core is equal to a length of the engaged portion in the radial direction of the rotor core.

According to the rotor configured as described above, the engaging portion and the engaged portion can abut against each other in the radial direction of the rotor core. Therefore, a magnetic flux can efficiently flow between the permanent magnets and the rotor core.

Preferably, the engaging portion has the protruding shape. The engaged portion has the groove shape.

According to the rotor configured as described above, the engaged portion having the groove shape is provided in the rotor core, and the engaging portion having the protruding shape is provided in the permanent magnet. Therefore, an amount of processing of the entire rotor can be reduced. Thus, the manufacturing cost of the rotor can be reduced more effectively.

Preferably, each of the plurality of permanent magnets includes: a first end surface disposed at one end in the axial direction of the rotor core; a second end surface disposed at the other end in the axial direction of the rotor core; and a first side surface and a second side surface connecting the first end surface and the second end surface to each other, and disposed to face each other in the circumferential direction of the rotor core. The engaging portion extends from the first end surface to the second end surface. In the circumferential direction of the rotor core, a distance from a corner portion formed by the first end surface and the first side surface to the engaging portion is equal to a distance from a corner portion formed by the second end surface and the second side surface to the engaging portion. A distance from a corner portion formed by the first end surface and the second side surface to the engaging portion is equal to a distance from a corner portion formed by the second end surface and the first side surface to the engaging portion.

According to the rotor configured as described above, an amount of processing of the permanent magnet can be reduced more effectively when the engaging portion having the protruding shape is provided in the permanent magnet.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### INDUSTRIAL APPLICABILITY

The present invention is applied to, for example, a motor for a machine tool.

### REFERENCE SIGNS LIST

10 rotor; 21 rotor core; 22, 42, 142 outer circumferential surface; 23, 24 end surface; 26, 26p, 26q, 61 engaged portion; 27 bottom surface; 31, 31P, 31Q, 31R, 131 permanent magnet; 33, 33J, 33j, 33k, 62 engaging portion; 34 top surface; 36, 36A, 36B, 36C, 36D, 36E, 36F, 36G, 36H, 361, 36J magnet segment; 41, 141 inner circumferential surface; 43, 143 first end surface; 44, 144 second end surface; 45, 145 first side surface; 46, 146 second side surface; 47, 48, 49, 50 corner portion; 101 central axis; 133 protruding portion.

## Claims

1. A rotor comprising:
a rotor core having an outer circumferential surface; and
a plurality of permanent magnets aligned in a circumferential direction of the rotor core and bonded to the outer circumferential surface, and provided to be inclined with respect to an axial direction of the rotor core, wherein
each of the plurality of permanent magnets includes an engaging portion, the engaging portion having one of a groove shape and a protruding shape, and extending linearly along the axial direction of the rotor core, and
the rotor core includes an engaged portion, the engaged portion having the other of the groove shape and the protruding shape, extending linearly along the axial direction of the rotor core, and being engaged by the engaging portion.

2. The rotor according to claim 1, wherein
each of the plurality of permanent magnets is composed of a plurality of magnet segments arranged along the axial direction of the rotor core while being displaced in the circumferential direction of the rotor core,
each of the plurality of magnet segments includes an inner circumferential surface that faces the outer circumferential surface, and one of a groove portion recessed from the inner circumferential surface and a protruding portion protruding from the inner circumferential surface, and
in a state where the plurality of magnet segments are arranged, a plurality of the groove portions or a plurality of the protruding portions are continuous in the axial direction of the rotor core, to thereby form the engaging portion.

3. The rotor according to claim 1 or 2, wherein
a length of the engaging portion in a radial direction of the rotor core is equal to a length of the engaged portion in the radial direction of the rotor core.

4. The rotor according to any one of claims 1 to 3, wherein
the engaging portion has the protruding shape, and
the engaged portion has the groove shape.

5. The rotor according to claim 4, wherein
each of the plurality of permanent magnets includes:
a first end surface disposed at one end in the axial direction of the rotor core;
a second end surface disposed at the other end in the axial direction of the rotor core; and
a first side surface and a second side surface connecting the first end surface and the second end surface to each other, and disposed to face each other in the circumferential direction of the rotor core,
the engaging portion extends from the first end surface to the second end surface, and
in the circumferential direction of the rotor core, a distance from a corner portion formed by the first end surface and the first side surface to the engaging portion is equal to a distance from a corner portion formed by the second end surface and the second side surface to the engaging portion, and a distance from a corner portion formed by the first end surface and the second side surface to the engaging portion is equal to a distance from a corner portion formed by the second end surface and the first side surface to the engaging portion.
